# EUROPÄISCHE PATENTSCHRIFT

(11) **EP 2 281 148 B1**
(45) Veröffentlichungstag und Bekanntmachung des Hinweises auf die Patenterteilung: **28.03.2012**
(21) Anmeldenummer: 09745550.5
(22) Anmeldetag: 13.05.2009
(51) Int. Cl.: F22B 37/02, C23F 11/14, C23F 11/18, F28F 19/00, F28G 9/00

(54) **CHEMISCHE WASSER-DAMPF-KREISLAUF-KONDITIONIERUNG**
CHEMICAL WATER-STEAM CYCLE CONDITIONING
CONDITIONNEMENT CHIMIQUE DE CIRCUIT EAU/VAPEUR

(30) Priorität: 13.05.2008 DE 102008023263
(43) Veröffentlichungstag der Anmeldung: 09.02.2011
(73) Patentinhaber: Hitachi Power Europe GmbH, 47059 Duisburg (DE)
(72) Erfinder: GÜNES, Sener, 47166 Duisburg (DE); TEUTENBERG, Ulrich, 46487 Wesel (DE)
(74) Vertreter: Bergmann, Michael
(86) Internationale Anmeldenummer: PCT/EP2009/003389
(87) Internationale Veröffentlichungsnummer: WO 2009/138216

(56) Entgegenhaltungen:
- EP-A1- 0 134 365
- EP-A1- 0 708 295
- EP-A1- 0 894 948
- EP-A1- 0 902 232
- DE-A1- 19 736 885

## Beschreibung

Die Erfindung richtet sich auf ein Verfahren zur chemischen Wasser-/Dampf-Konditionierung eines im Wasser-Dampf-Kreislauf eines, insbesondere fossil befeuerten, Durchlaufdampferzeugers einer Kraftwerksanlage im Kreislauf geführten Wasser-/Dampf-/Kondensat-Mediums, welches stromabwärts einer Turbinenanlage einem im Wasser-Dampf-Kreislauf angeordneten Luftkondensator zugeführt wird, wobei die chemische Wasser-/Dampf-Konditionierung die Zudosierung eines alkalisch wirkenden Mittels in das Wasser-/Dampf-/Kondensat-Medium umfasst.

Weiterhin richtet sich die Erfindung auf eine Kraftwerksanlage, mit einem, insbesondere fossil befeuerten Durchlauf-Dampferzeuger mit mindestens einer angeschlossenen Turbine und mindestens einem der mindestens einen Turbine nachgeordneten Luftkondensator sowie mit einen umlaufenden Wasser-Dampf-Kreislauf ausbildenden und Einrichtungen zur Durchführung einer chemischen Wasser-/Dampf-Konditionierung mittels eines alkalisch wirkenden Mittels aufweisenden Rohrleitungen, die in den Luftkondensator einmündenden Turbinenkondensataustrittsleitungen umfassen.

Im Stand der Technik sind aus EP-134365-A und EP-0 902 232-A ähnliche Verfahren und Kraftwerkanlage bekannt.

Um den Wasser-Dampf-Kreislauf zwischen dem Dampferzeuger und angeschlossenen Turbinen einer großtechnischen Kraftwerksanlage dauerhaft betreiben zu können, ist es notwendig, das im Wasser-Dampf-Kreislauf rezirkulierende Medium chemisch zu behandeln oder zu konditionieren, um eine gewünschte Qualität des Speisewassers bzw. des umlaufenden Wasser-/Dampf-/Kondensat-Mediums einzustellen. In der Praxis, die auch ihren Niederschlag in dem einschlägigen Regelwerk gefunden hat, sind im Wesentlichen drei chemische Konditionierungsverfahren oder Fahrweisen zur Anwendung beim Wasser-Dampf-Kreislauf einer Kraftwerksanlage mit Durchlaufdampferzeuger bekannt. Dies sind die alkalische Fahrweise oder das AVT (All Volatile Treatment)-Verfahren, die neutrale Fahrweise oder neutrale Konditionierung und die kombinierte Fahrweise oder das OT (Oxygene Treatment)-Verfahren.

Bei der alkalischen Fahrweise oder dem AVT-Verfahren wird das Speisewasser des Wasser-Dampf-Kreislaufs entgast und mit Ammoniak ein alkalischer pH-Wert des Speisewassers von 9,2 bis 9,8 eingestellt. Die Dosierung des Ammoniaks erfolgt in Kondensatströmungsrichtung stromabwärts einer Kondensatreinigungsanlage und stromabwärts eines Speisewassertanks, die im Wasser-Dampf-Kreislauf des Durchlaufdampferzeugers angeordnet sind. Bei pH-Werten von 9,2 bis 9,8 ist die Löslichkeit von Eisen in Wasser minimiert und ein reduzierendes Milieu eingestellt. Bei dieser Fahrweise bzw. diesem Verfahren bildet sich auf der Stahloberfläche der mit dem Wasser/Dampf des Wasser-Dampf-Kreislaufes in Berührung kommenden Oberflächen von Leitungsrohren oder sonstigen Vorrichtungen eine Schutzschicht aus Magnetit (Fe₃O₄) aus. Diese Schutzschicht ist aber nicht an jeder Stelle des Wasser-Dampf-Kreislaufes gleich ausgebildet, sondern weist unterschiedliche Porositäten auf und gibt darüber hinaus während des Betriebes oberflächlich ständig Eisenoxidpartikel ab, die sich dann häufig im Verdampferbereich unter Ausbildung einer so genannten Riffelstruktur absetzen. Diese so genannte Riffelrauigkeit hat dann einen deutlichen wirkungsgradverlust aufgrund eines Anstieges des Differenzdruckes im Verdampfer zur Folge. Dies macht eine regelmäßige, aufwändige Reinigung mit Säure nach einer bestimmten Betriebszeit erforderlich.

Die neutrale Fahrweise nutzt Sauerstoff zur Konditionierung des Wasser-Dampf-Kreislaufes. Hierbei wird kein Alkalisierungsmittel dem Wasser/Dampf des Wasser-Dampf-Kreislaufes, sondern eine Sauerstoffdosierung von beispielsweise 30 bis 250 µg/l dem wasser/Dampf zugesetzt und es stellt sich ein pH-Wert von 7 ein. Durch diese Verfahrensweise bzw. dieses Verfahren wird unter oxidierenden Bedingungen (positives Redoxpotenzial) auf der Stahloberfläche der mit dem Wasser/Dampf in Berührung kommenden Komponenten, Einrichtungen und Vorrichtungen des Durchlaufdampferzeugers bzw. des Wasser-Dampf-Kreislaufes eine schützende Oxidschicht aus Hämatit (Fe₂O₃) gebildet. Die Hämatitschicht weist gegenüber der Magnetitschicht eine feinere Struktur auf und baut sich auch in einer demgegenüber nur dünnen, elastischen Schichtform auf. Die Hämatitschicht verlangsamt auch das weitere Schichtwachstum, wobei die Abgaberate von Eisenoxidpartikeln in das Wasser/den Dampf deutlich geringer ist als beim Magnetit. Auch kommt es zu weiniger Abplatzungen der Schutzschicht bei thermischen Wechselbeanspruchungen der Anlage bzw. der diversen Anlagekomponenten. Nachteilig ist, dass sich aufgrund des niedrigeren pH-Wertes 7 in dem Wasser-Dampf-Kreislauf bzw. dem Wasser-/Dampf-/Kondensatsystem eine erhöhte Löslichkeit für die Eisenoxide in Wasser ausbildet.

Eine Kombination der beiden vorstehend beschriebenen Verfahren stellt die kombinierte Fahrweise oder das OT-Verfahren dar, bei welcher/welchem Sauerstoff und Ammoniak dosiert, der pH-Wert im Wasser/Dampf mit 8,5 bis 9,0, vorzugsweise 8,4 bis 8,6, aber deutlich niedriger als bei der alkalischen Fahrweise eingestellt wird. Auch hier erfolgt die Zudosierung von Ammoniak und Sauerstoff, wobei der Sauerstoff mit einer Dosierung von ebenfalls 30 bis 250 µg/l zudosiert wird, in dem Wasser-Dampf-Kreislauf in Kondensatströmungsrichtung stromabwärts einer Kondensatreinigungsanlage und stromabwärts einer Speisewasserentgasung oder des Speisewassertanks. Bei dieser Fahrweise wird der Durchlaufdampferzeuger zunächst bei der Erstinbetriebnahme alkalisch analog der alkalischen Fahrweise (AVT-Verfahren) angefahren und nach einer Stabilisierungsphase auf die kombinierte Fahrweise (OT-Verfahren) umgestellt. Durch die Dosierung von Sauerstoff, dies jedoch ggf. in einer geringeren Menge von 30-150 µg/l als bei der neutralen Fahrweise wird unter den bei der kombinierten Fahrweise (OT-Verfahren) herrschenden oxidierenden Bedingungen die sich aufgrund des alkalischen Anfahrens zunächst bildende Magnetit-Schicht anschließend mit einer Hämatitschicht überwachsen, so dass die Vorteile der neutralen Fahrweise dann auch bei der kombinierten Fahrweise wirken. Es wird die Riffelbildung, d. h. die Ausbildung der so genannten Riffelrauigkeit, vermieden, so dass sich die damit verbundenen Wirkungsgradverluste nicht einstellen. Weiterhin wird durch den gegenüber der neutralen Fahrweise aber angehobenen pH-Wert die Löslichkeit des Eisens gegenüber jener Fahrweise vermindert.

Die kombinierte Fahrweise (OT-Verfahren) stellt heutzutage in der Praxis das Verfahren dar, mit welchem weltweit die Mehrzahl von Durchlaufdampferzeugern betrieben wird.

Allerdings sind mit der kombinierten Fahrweise (OT-Verfahren) dann Nachteile verbunden, wenn im Wasser-Dampf-Kreislauf ein Luftkondensator angeordnet ist, der beispielsweise hinter der Niederdruckturbine eines Wasser-Dampf-Kreislaufes angeordnet sein kann. Derartige luftgekühlte Kondensatoren (Luftkondensator) sind üblicherweise aus ferritischem Material gefertigt. Werden diese im Rahmen des Wasser-Dampf-Kreislaufes mit Wasser/Dampf als Medium beaufschlagt, zeigen diese Stahlmaterialien Korrosionserscheinungen. Diese ließen sich nur bei einem pH-Wert >9,5 des Wasser-/Dampf-/Kondensat-Mediums vermeiden. Ein solch hoher pH-Wert ist bei der kombinierten Fahrweise aber nicht vorgesehen. Würde man andererseits den pH-Wert bei der bekannten kombinierten Fahrweise (OT-Verfahren) dahingehend modifizieren, dass man bei gleichzeitiger Sauerstoffeindosierung nun einen deutlich höheren pH-Wert im Bereich von >9,5 einstellt, dann bestünde bei Eindosierung an den bei der kombinieten Fahrweise (OT-Verfahren) vorgesehenen Stellen in Kondensatströmungsrichtung stromabwärts der Kondensatreinigungsanlage und/oder stromabwärts des Speisewassertanks im Wasser-Dampf-Kreislauf die Gefahr, dass bei hohen Temperaturen und überkritisch betriebenen Kesseln oder Dampferzeugern der Sauerstoff das Ammoniak zu korrosiven Nitraten/Nitriten oxidiert. Außerdem müsste bei einer solchen Verfahrensweise jederzeit sichergestellt sein, dass das Redoxpotenzial im positiven Bereich liegt, um die erwünschte Hämatitschutzschicht ausbilden zu können. Ferner liegen Erfahrungen vor, dass bei einer solchen Verfahrensweise es zu einer übermäßigen Adhäsion von Hämatit auf der Rohrinnenseite kommt, was zu erhöhten Rohrwandtemperaturen führt und die Notwendigkeit einer häufigeren chemischen Reinigung nach sich zieht.

Der Erfindung liegt die Aufgabe zugrunde, eine Lösung zu schaffen, die bei Einsatz luftgekühlter Kondensatoren aus ferritischem Material im Wasser-Dampf-Kreislauf eines Dampferzeugers bei Anwendung der kombinierten Fahrweise (OT-Verfahren) oder der neutralen Fahrweise das Auftreten von Erosionskorrosion und korrosiver Nitrat- und/oder Nitritbildung vermeidet.

Bei einem Verfahren zur chemischen Wasser-/Dampf-Konditionierung der eingangs bezeichneten Art wird diese Aufgabe erfindungsgemäß dadurch gelöst, dass dem Wasser-/Dampf-/Kondensat-Medium stromabwärts des Durchlaufdampferzeugers, im Bereich mindestens einer Niederdruckturbine und/oder stromabwärts einer Niederdruckturbine, und vor Eintritt in den Luftkondensator, insbesondere zusätzlich, das alkalisch wirkende Mittel zudosiert und eine alkalische Fahrweise (AVT) der Wasser-/Dampf-Konditionierung eingestellt und durchgeführt wird, wobei mittels der Zudosierung des alkalisch wirkenden Mittels in dem Wasser-/Dampf-/Kondensat-Medium des Wasser-Dampf-Kreislaufes vor Eintritt in den Luftkondensator (12) ein pH-Wert zwischen 9,6 und 9,9 eingestellt wird.

Ebenso wird diese Aufgabe bei einer Kraftwerksanlage der eingangs näher bezeichneten Art dadurch gelöst, dass alle in den mindestens einen Luftkondensator einmündende Turbinenkondensataustrittsleitungen und/oder den Turbinenkondensataustrittsleitungen aus dem Bereich stromabwärts des Durchlaufdampferzeugers, vorzugsweise von der Niederdruckturbine, das Wasser-/Dampf-/Kondensat-Medium zuführende Rohrleitungen mindestens eine stromaufwärts des Luftkondensators angeordnete Alkalisierungsmittel-Eindosierungseinrichtung aufweisen.

Die Erfindung geht somit den Weg, in Dampf- und Kondensatströmungsrichtung zwischen dem Dampferzeuger und diesem stromabwärts der Turbinenanlage zugeordneten luftgekühlten Kondensatoren oder Luftkondensatoren, insbesondere zwischen der oder den Niederdruckturbinen des Wasser-Dampf-Kreislaufes eines Durchlaufdampferzeugers einer Kraftwerksanlage und dem oder den jeweils zugeordneten luftgekühlten Kondensator(en) oder Luftkondensator(en), eine alkalische Fahrweise oder eine Fahrweise nach dem AVT-Verfahren zu implementieren. Hierzu wird in diesem Bereich des Wasser-Dampf-Kreislaufes, insbesondere zwischen Niederdruckturbine und luftgekühlten Kondensator bzw. Luftkondensator eine Eindosierung von Ammoniak (NH₃) und/oder organischen Alkalisierungsmittel als alkalisch wirkendem Mittel vorgesehen. Es ist damit möglich, das dem luftgekühlten Kondensator oder Luftkondensator zufließende Medium aus Wasser und/oder Dampf und/oder Kondensat in seinem pH-Wert auf einen solch hohen wert oder ein solch hohes Niveau einzustellen, dass sich im luftgekühlten Kondensator oder Luftkondensator ein Milieu und ein Zustand einstellt, der eine Erosionskorrosion verhindert. Durch das erfindungsgemäße Verfahren wird es ermöglicht, dass es auch dann, wenn in Teilen des Wasser-Dampf-Kreislaufes eine OT-Wasser-/Dampfkonditionierung oder kombinierte Fahrweise oder neutrale Fahrweise stattfindet, im Bereich luftgekühlter Kondensatoren aus ferritischem Material nicht zu Erosionskorrosionserscheinungen sowie insbesondere im Verdamfer-, Überhitzer- und/oder Zwischenüberhitzerbereich des Durchlaufdampferzeugers nicht zur Bildung korrosiver Nitrat- und/oder Nitritverbindungen kommt. Gleichzeitig werden dadurch die übermäßige Adhäsion von Hämatit und die damit verbundenen Nachteile vermieden.

Insbesondere ist das erfindungsgemäße Verfahren vorteilhaft beim Betrieb von überkritischen Durchlaufdampferzeugern mit Temperaturen über 600°C im Bereich der Kessel- bzw. Dampferzeuger anzuwenden. Diese Vorteile stellen sich bei dem erfindungsgemäßen Verfahrens und ebenso bei der erfindungsgemäßen Kraftwerksanlage ein.

Als alkalisch wirkendes Mittel wird gemäß Ausgestaltung der Erfindung ein organisches Alkalisierungsmittel und/oder Ammoniak zudosiert. Bei dem organischen Alkalisierungsmittel kann es sich insbesondere um Cyclohexylamin, Morpholine, Diethylaminoethanol, Ethanolamin oder Ähnliches, auch in Mischung einer oder mehrerer dieser Komponenten handeln. Gedanklich und konzeptionell wird somit der gesamte Wasser-Dampf-Kreislauf in zwei Teilbereiche aufgeteilt, nämlich den einen Teil zwischen Durchlaufdampferzeuger und Luftkondensator, insbesondere Niederdruckturbine und Luftkondensator, und den übrigen, zweiten Teil nach dem Luftkondensator bis zum Durchlaufdampferzeuger oder ggf. bis zur Niederdruckturbine. Dieser zweite Teil, der das Speisewassersystem mit dem Speisewassertank, dem Dampferzeuger, Überhitzer, Zwischenüberhitzer und ggf. Turbinen bis zu den Niederdruckturbinen umfasst, kann, wie von der üblichen kombinierten Fahrweise oder dem üblichen OT-Verfahren bekannt, nach diesem Verfahren betrieben werden. D. h., hier wird nach dem Luftvorwärmer in Kondensatströmungsrichtung stromabwärts einer Kondensatreinigungsanlage und stromabwärts des Speisewassertankes das Wasser-/Dampf-/Kondensat-Medium mittels Dosierung eines alkalisch wirkenden Mittels auf einen pH-Wert von 8,5 bis 9,0 eingestellt, wobei gleichzeitig mit der Dosierung des alkalisch wirkenden Mittels eine Sauerstoff (O₂)-Dosierung von 30 bis 250 µg/l erfolgt. Natürlich kann in diesem Bereich aber auch eine neutrale Fahrweise bezüglich der Wasser-/Dampf-Konditionierung durchgeführt werden.

Um im Übergang von dem Bereich der alkalischen Fahrweise zum Bereich der kombinierten Fahrweise oder der neutralen Fahrweise u. a. den pH-Wert anpassen, d. h. erniedrigen, zu können, bietet es sich an, eine Kondensatreinigungsanlage vorzusehen. Um diese in der Regel für die Entfernung von Ammoniak ausgelegte Anlage bei der verwendung von organischem Alkalisierungsmittel als alkalisch wirkendem Mittel nicht mit diesem organischen Alkalisierungsmittel zu belasten, ist es zweckmäßig, in Kondensatströmungsrichtung stromabwärts des Luftkondensators vor der Kondensatreinigungsanlage einen Aktivkohlefilter oder ein Zeolithe aufweisendes Molekularsieb vorzusehen und anzuordnen, mit welchem das organische Alkalisierungsmittel selektiv aus dem Kondensat entfernt werden kann. Die Erfindung sieht daher weiterhin vor, dass aus dem Wasser-/Dampf-/Kondensat-Medium stromabwärts des Luftkondensators vor Eintritt in eine Kondensatreinigungsanlage organisches Alkalisierungsmittel zumindest teilweise selektiv, insbesondere mittels Aktivkohlefilter oder Zeolithe aufweisender Filter, abgetrennt wird.

Da sich die erfindungsgemäße alkalische Fahrweise im Bereich des Wasser-Dampf-Kreislaufes zwischen einem Durchlaufdampferzeuger und einem Luftkondensator gut mit einer kombinierten Fahrweise im Bereich des Wasser-Dampf-Kreislaufes vom Luftkondensator zum Durchlaufdampferzeuger kombinieren lässt, sieht die Erfindung in weiterer Ausgestaltung vor, dass stromabwärts des Luftkondensators in dem Wasser-Dampf-Kreislauf stromabwärts einer Kondensatreinigungsanlage und/oder stromabwärts eines Speisewassertanks eine kombinierte Fahrweise (OT) der Wasser-/Dampf-Konditionierung mit einer einen pH-Wert von 8,5 bis 9,0 im Wasser-/Dampf-/Kondensat-Medium des Wasser-Dampf-Kreislaufs einstellenden Dosierung eines alkalisch wirkenden Mittels und einer Sauerstoff-Dosierung von 30 - 250 µg/l, insbesondere 30 - 150 µg/l, durchgeführt und eingestellt wird.

Für diesen wie vorstehend definiert "zweiten" Teil des Wasser-Dampf-Kreislaufes kann somit die klassische, übliche kombinierte Fahrweise/OT-Konditionierung mit Ammoniak- und Sauerstoff-Dosierung zur Wasser-/Dampf-Konditionierung Verwendung finden, während im Teilbereich hinter dem Dampferzeuger, insbesondere ab Beginn der Niederdruckturbinenkondensataustrittsleitung, bis zum Luftkondensator eine Wasser-/Dampf-Konditionierung mit alkalischer Fahrweise/alkalischer Konditionierung durchgeführt wird.

Hierzu ist es notwendig, mindestens eine zusätzliche Dosierstelle in der Turbinenkondensataustrittsleitung für die Eindosierung von alkalisch wirkendem Mittel oder Alkalisierungsmittel vorzusehen, wobei die jeweiligen Dosierstellen bzw. Dosiereinrichtungen so ausgebildet und angeordnet sein müssen, dass es zu einer guten Durchmischung zwischen dem Wasser-/Dampf-/(Turbinen)Kondensat-Medium und dem insbesondere gasförmig oder als wässrige Lösung eingedüsten alkalisch wirkenden Mittel kommt. Hierdurch wird der pH-Wert des Mediums (Wasser/Dampf/(Turbinen)Kondensat) auf den im Bereich des ferritischen Luftkondensators gewünschten hohen pH-Wert angehoben.

Auch wenn vorstehend erläutert ist, dass im "zweiten" Teil des Wasser-Dampf-Kreislaufes eine kombinierte Fahrweise (OT-Konditionierung) vorgesehen sein kann, so ist es aber ebenfalls möglich, in diesem "zweiten" Teil auch eine neutrale Fahrweise/neutrale Konditionierung vorzusehen.

Um den Gehalt an alkalisch wirkendem Mittel, insbesondere Ammoniakgehalt, stromabwärts des Luftkondensators wieder auf das für die kombinierte Fahrweise (OT-Verfahren) übliche Niveau abzusenken, wird das in dem Wasser-Dampf-Kreislauf geführte und an dieser Stelle als Kondensat oder Turbinenkondensat vorliegende Medium vollständig oder teilweise permanent über eine Kondensatreinigungsanlage geführt. Hierbei kann dadurch, dass zumindest ein Teilstrom des Mediums über die Kondensatreinigungsanlage geführt wird und später dem restlichen Medienstrom wieder zugeführt wird, dem Medienstrom wieder soviel alkalisch wirkendes Mittel, insbesondere Ammoniak, entzogen werden, dass im Wasser-Dampf-Kreislauf stromabwärts der Kondensatreinigungsanlage der für das OT-Verfahren gewünschte pH-Wert für den Kessel- bzw. Dampferzeugerbereich von 8,5 bis 9,0 eingestellt wird. Wird das Medium vollständig durch die Kondensatreinigungsanlage geführt, so kann über die für die OT-Fahrweise vorgesehenen Dosierstellen stromabwärts der Kondensatreinigungsanlage und stromabwärts des Speisewassertanks das alkalisch wirkende Mittel, insbesondere Ammoniak, zur Einstellung des gewünschten pH-Wertes nachdosiert werden.

Wie beim erfindungsgemäßen Verfahren zur chemischen Wasser-/Dampf-Konditionierung im Wasser-Dampf-Kreislauf eines Durchlaufdampferzeugers einer Kraftwerksanlage, ist in Ausgestaltung der erfindungsgemäßen Kraftwerksanlage vorgesehen, dass die Alkalisierungsmittel-Eindosierungseinrichtung Vorrichtungen zur Einstellung und Kontrolle der Durchführung einer alkalischen Fahrweise (AVT) der Wasser-/Dampf-Konditionierung umfasst.

Um in Kondensatströmungsrichtung im Wasser-Dampf-Kreislauf hinter dem Luftkondensator Alkalisierungsmittel, insbesondere organisches Alkalisierungsmittel und/oder Ammoniak, zur Erreichung der Absenkung des pH-Wertes des Wasser-/Dampf-/Kondensat-Mediums zumindest teilweise aus diesem entfernen zu können, zeichnet sich die Kraftwerksanlage weiterhin dadurch aus, dass stromabwärts des Luftkondensators und stromaufwärts eines Speisewassertanks eine Kondensatreinigungsanlage angeordnet ist.

Um bei der Verwendung von organischem Alkalisierungsmittel dieses vor Erreichen der Kondensatreinigungsanlage selektiv aus dem Wasser-/Dampf-/Kondensat-Medium entfernen zu können, sieht die Erfindung in weiterer Ausgestaltung vor, dass in Kondensatströmungsrichtung zwischen dem Luftkondensator und dem Speisewassertank, vorzugsweise vor einer/der Kondensatreinigungsanlage, ein Aktivkohlefilter oder Molekularsieb von dem Wasser-/Dampf-/Kondensat-Medium zumindest teilweise durchströmbar angeordnet ist.

Da es von Vorteil ist, wenn die zur Einstellung des pH-Wertes im Luftkondensator vorgesehene AVT-Wasser-/Dampf-Konditionierung im übrigen Teil des Wasser-Dampf-Kreislaufes mit einer OT-Wasser-/Dampf-Konditionierung zur Durchführung einer kombinierten Fahrweise oder des OT-Verfahrens kombiniert ist, zeichnet sich die Erfindung schließlich auch dadurch aus, dass bei der Kraftwerksanlage der Wasser-Dampf-Kreislauf dem Luftkondensator nachgeschaltet und dem Durchlaufdampferzeuger vorgeschaltet eine zweite und/oder dritte Alkalisierungsmittel-Eindosierungseinrichtung mit zugeordneter Sauerstoffdosierungseinrichtung sowie eine kombinierte Fahrweise (OT) der Wasser-/Dampf-Konditionierung einstellende und durchführende Steuerungsmittel aufweist.

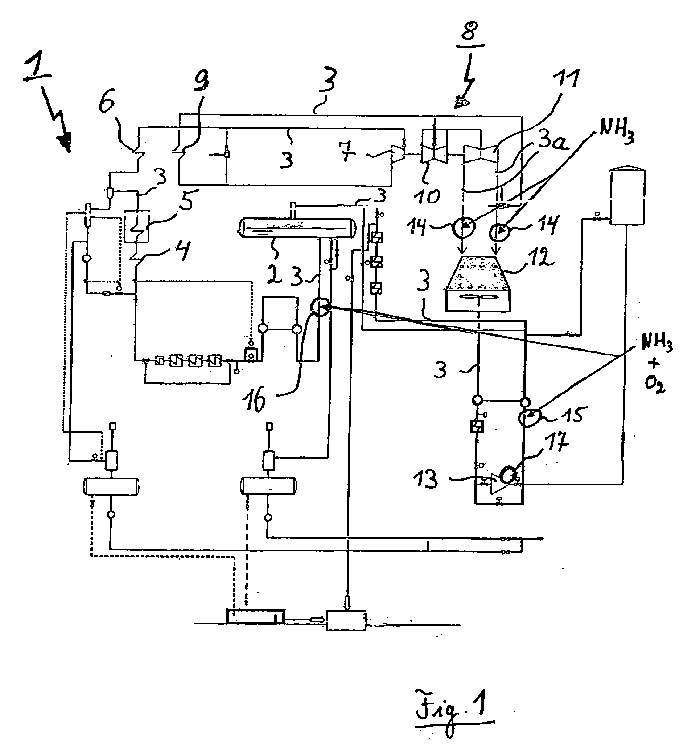

Die Erfindung ist nachstehend anhand einer Zeichnung beispielhaft näher erläutert. Diese zeigt in
- Fig. 1: in schematischer Fließbilddarstellung einen Wasser-Dampf-Kreislauf eines fossilbefeuerten Durchlaufdampferzeugers einer Kraftwerksanlage.

Die Figur 1 stellt schematisch einen Wasser-Dampf-Kreislauf in erfindungsgemäßer Ausgestaltung mit einer AVT-Wasser-Dampf-Kreislaufkonditionierung mit Möglichkeit zur zusätzlichen OT-Wasser-Dampf-Kreislaufkonditionierung dar.

Die Figur 1 zeigt einen insgesamt mit 1 bezeichneten Durchlaufdampferzeuger, dem ausgehend von einem Speisewassertank 2 durch Leitungen 3 in dem Wasser-Dampf-Kreislauf geführtes Wasser-/Dampf-/Kondensat-Medium zugeführt und in einem Vorwärmer 4 mit nachfolgendem Verdampfer 5 und dem nachfolgenden Überhitzer 6 in Dampf überführt wird. Der Dampf wird dann der Hochdruckturbine 7 der Turbinenanlage 8 zugeführt. Von der Hochdruckturbine 7 wird das im: Wasser-Dampf-Kreislauf geführte Medium einem Zwischenüberhitzer 9, von wo aus es über einen weiteren Teilabschnitt der den Wasser-Dampf-Kreislauf ausbildenden Rohrleitungen 3 zur Mitteldruckturbine 10 und von dort zur Niederdruckturbine 11 der Turbinenanlage 8 gelangt. Von der Niederdruckturbine 11 führen Teilleitungen 3a der Leitungen 3 in Form von Turbinenkondensataustrittsleitungen 3a Turbinenkondensat und/oder Niederdruckdampf zu einem luftgekühlten Kondensator oder Luftkondensator 12. Den Luftkondensator 12 verlässt das im Wasser-Dampf-Kreislauf geführte Medium dann über weitere Leitungen 3 in Strömungsrichtung zu einer Kondensatreinigungsanlage 13, die zumindest ein Teilstrom des Medienstromes durchfließt, bevor dann der wiedervereinigte Gesamtmedienstrom stromabwärts der Kondensatreinigungsanlage 13 über weitere Teilabschnitte der Leitung 3 dem Speisewassertank 2 mit Speisewasserentgasung zugeführt wird. In diesem, im Wesentlichen durch den Verlauf der Rohrleitungen 3, 3a gekennzeichneten Wasser-Dampf-Kreislauf sind verschiedene Einrichtungen und Vorrichtungen zur Durchführung einer chemischen Wasser-/Dampf-Konditionierung mittels eines oder mehrerer Alkalisierungsmittel oder alkalisch wirkender Mittel angeordnet und ausgebildet. So' sind die Turbinenkondensataustrittsleitungen 3a im Bereich zwischen ihrem Austritt aus der Niederdruckturbine 11 und ihrer Einmündung in den Luftkondensator 12 mit Alkalisierungsmittel-Eindosierungseinrichtungen 14 in Form von Ammoniak (NH₃)-Eindosierungseinrichtungen ausgestattet. Über diese Alkalisierungsmittel-Eindosierungseinrichtungen 14 wird dem in den Turbinenkondensataustrittsleitungen 3a geführten Wasser-/Dampf-/Kondensat-Medium Ammoniak in einer solchen Art und Weise geregelt und dosiert zugeführt, dass stromabwärts der Alkalisierungsmittel-Eindosierungseinrichtungen 14 und insbesondere im Luftkondensator 12 eine AVT-Wasser-/Dampf-Konditionierung, d. h. die Durchführung einer alkalischen Fahrweise oder eines AVT-Verfahrens möglich und sichergestellt ist. Hierzu wird über die Ammoniak-Eindosierungseinrichtungen 14 Ammoniak in einer solchen Menge eindosiert, dass sich in dem.in den Leitungen 3a strömenden Medium ein pH-Wert zwischen 9,6 und 9,9 einstellt. Die Ammoniak-Eindosierungseinrichtungen 14 und -vorrichtungen sind dabei derart konzipiert, ausgebildet und eingerichtet, dass das gasförmig oder als wässrige Lösung eindosierte, insbesondere eingedüste Ammoniak gut mit dem in den Leitungen 3a strömenden Wasser-/Dampf-/Kondensat-Medium vermischt wird. Stromabwärts dieser AVT (All Volatile Treatment)-chemischen Wasser-/Dampf-Konditionierung und dem Luftkondensator 12 nachgeschaltet und dem eigentlichen Dampferzeuger 1 mit Vorwärmer 4, Verdampfer 5 und Überhitzer 6 vorgeschaltet sind dann eine zweite Alkalisierungsmittel-Eindosierungseinrichtung 15 in Form einer zweiten Ammoniak-Eindosierungseinrichtung 15 mit zugeordneter Sauerstoffdosierungseinrichtung sowie eine dritte Alkalisierungsmittel-Eindosierungseinrichtung 16 in Form einer Ammoniak-Eindosierungseinrichtung 16 mit zugeordneter Sauerstoffdosierungseinrichtung im Verlauf der Rohrleitungen 3 ausgebildet und angeordnet. Hierbei ist die zweite Ammoniak-Eindosierungseinrichtung 15 stromabwärts der Kondensatreinigungsanlage 13 und die dritte Ammoniak-Eindosierungseinrichtung 16 stromabwärts des Speisewassertanks 2 und der Speisewasserentgasung angeordnet. Mit Hilfe dieser zweiten und dritten Ammoniak-Eindosierungseinrichtungen 15, 16 mit zugeordneter Sauerstoffdosierungseinrichtung ist es möglich, in diesem Teilabschnitt des Wasser-Dampf-Kreislaufes stromabwärts des Luftkondensators 12 und vor Eintritt des Wasser-/Dampf-/Kondensat-Mediums in den eigentlichen, den Vorwärmer 4, den Verdampfer 5 und den Überhitzer 6 aufweisenden Durchlaufdampferzeuger in dem Wasser-Dampf-Kreislauf stromabwärts der Kondensatreinigungsanlage 13 und stromabwärts des Speisewassertanks 2 kombinierte Fahrweise oder eine OT-Wasser-/Dampf-Konditionierung zur Durchführung einer kombinierten (Kombination von alkalischer und neutraler Fahrweise) Fahrweise durchzuführen und einzurichten. Die Ammoniak-Eindosierungseinrichtungen 15, 16 sind hierfür mit den notwendigen Steuerungsmitteln sowie Steuerungs- und Kontrollvorrichtungen und -einrichtungen versehen. Mit der zweiten und dritten Ammoniak-Eindosierungseinrichtung 15, 16 lässt sich in dem in der Rohrleitung 3 geführten Medienstrom aus Wasser-/Dampf-/Kondensat-Medium hinter der als Alkalisierungsmittelsenke wirkenden Kondensatreinigungsanlage 13 durch entsprechende Ammoniak-Dosierung ein pH-Wert von 8,5 bis 9,0 einstellen, wobei weiterhin eine Sauerstoff-Dosierung von 30 bis 250 µg/l erfolgt.

Um den pH-Wert in dem im Wasser-Dampf-Kreislauf geführten Strömungsmedium bzw. Medienstrom stromabwärts des Luftkondensators 12 bezüglich des pH-Wertes von dem AVT-Niveau auf das "OT"-Niveau gezielt absenken zu können, durchströmt zumindest ein Teilstrom des Medienstromes die Kondensatreinigungsanlage 13. Diese Kondensatreinigungsanlage 13 ist als Ammoniak-Senke ausgestattet, die es ermöglicht, in diesem Teilstrom und/oder in dem durch die Kondensatreinigungsanlage 13 geführten und/oder nach der Kondensatreinigungsanlage wieder zusammengeführten Gesamtmedienstrom einen pH-Wert von 8,5 bis 9,0 geregelt einzustellen. Da in der Kondensatreinigungsanlage 13 das Ammoniak dem Medienstrom bzw. dem im Kreislauf des Wasser-Dampf-Kreislauf geführten Wasser-/Dampf-/Kondensat-Mediums entzogen wird und im Regenerat des Ionentauschers dieser Kondensatreinigungsanlage anfällt, werden der oder die Ionentauscher nach einer bestimmten Laufzeit für ihren erneuten Einsatz mit Säure/Lauge regeneriert. Um das im Regenerat der Kondensatreinigungsanlage anfallende Ammoniak wieder zu verwenden, wird das Regenerat einem Ammoniakstripper zugeführt und wiedergewonnen. Das wiedergewonnene Ammoniak kann dann z. B. in der Entstickungsanlage (DeNox-Anlage) der jeweiligen Kraftwerksanlage Verwendung finden. In der Stripper-Vorrichtung wird das mit Ammoniak beladene Regenerat von oben einer Kolonne zugeführt und von unten Dampf zugeführt. In üblicher Weise strippt der aufsteigende Dampf dann das Ammoniak aus dem Regenerat, so dass der mit Ammoniak beladene Dampf einer Kondensationseinrichtung mit Auskondensation des Ammoniaks zugeführt werden kann.

Mit dem in der Figur 1 dargestellten Dampferzeuger mit Wasser-Dampf-Kreislauf ist es möglich, den den Speisewassertank 2, den eigentlichen Dampferzeuger mit Vorwärmer 4, Verdampfer 5, Überhitzer 6 sowie die Turbinenanlage 8 bis zur Niederdruckturbine 11 umfassenden Teil des Wasser-Dampf-Kreislaufes mit der üblichen kombinierten Fahrweise oder dem OT-Verfahren durchzuführen und hier eine OT-Wasser-/Dampf-Konditionierung vorzunehmen. Gleichzeitig ist es möglich, in dem Teil des Wasser-Dampf-Kreislaufes von der Niederdruckturbine 11 bis einschließlich des Luftkondensators 12 eine alkalische Fahrweise oder ein AVT-verfahren zur AVT- Wasser-/Dampf-Konditionierung durchzuführen. Beim Verfahren zum Betrieb des Wasser-Dampf-Kreislaufes des Durchlaufdampferzeugers 1 wird dann stromabwärts der Kondensatreinigungsanlage 13 und stromabwärts des Speisewassertanks 2 eine chemische Wasser-/Dampf-Konditionierung nach dem OT-Verfahren mit einem pH-Wert zwischen 8,5 und 9 in dem Wasser-/Dampf-/Kondensat-Medium und einer Zudosierung von 30 bis 250 µg O₂/l Medium durchgeführt und stromabwärts der Niederdruckturbine 11 und stromaufwärts des Luftkondensators 12 eine chemische Wasser-/Dampf-Konditionierung mit alkalischer Fahrweise/alkalischer Konditionierung nach dem AVT-Verfahren durchgeführt und zwischengeschaltet, mittels welcher eine AVT-Wasser-/Dampf-Konditionierung mit einem pH-Wert zwischen 9,6 und 9,9 in dem Wasser-/Dampf-/Kondensat-Medium des Wasser-Dampf-Kreislaufes eingestellt wird.

Auch wenn im vorliegenden Ausführungsbeispiel lediglich eine Turbinenanlage und im Wesentlichen eine einzige Leitungsführung 3 dargestellt ist, so kann eine erfindungsgemäße Kraftwerksanlage in nicht dargestellter Weise aber auch mehrere Turbinenanlagen oder mehrere Turbinen und mehr als die dargestellten Leitungen 3, 3a zur Ausbildung eines oder mehrerer Wasser-/Dampf-Kreisläufe aufweisen. Wichtig ist lediglich, dass die erfinderische Grundkonzeption der Kombination einer alkalischen Fahrweise einer AVT-Wasser-/Dampf-Konditionierung in Strömungsrichtung vor einem jeweiligen Luftkondensator mit einer kombinierten Fahrweise einer OT-Wasser-/Dampf-Konditionierung oder einer neutralen Fahrweise in Strömungsrichtung nach einem jeweiligen Luftkondensator und strömungstechnisch vor dem jeweiligen eigentlichen Durchlaufdampferzeuger oder Dampferzeuger ausgebildet ist und durchgeführt wird.

Auch wenn vorstehend jeweils von einer Ammoniak(NH₃)-Dosierung gesprochen wird, so umfasst dies doch auch die Zudosierung von wässrigen Ammoniak-Lösungen oder Ammoniakhaltigen Verbindungen.

Angefahren werden kann die Anlage wie üblich mit einer AVT-Konditionierung und nachfolgend einer Teilumschaltung auf die OT-Konditionierung im "zweiten" Teil des Wasser-Dampf-Kreislaufs.

Auch wenn das Ausführungsbeispiel die Kombination einer alkalischen Fahrweise im Bereich des Wasser-Dampf-Kreislaufes in Kondensatströmungsrichtung vor dem Luftkondensator 12 mit einer kombinierten Fahrweise im Bereich in Kondensatströmungsrichtung hinter dem Luftvorwärmer 12 verbindet, so kann in diesem "zweiten" Teil des Wasser-Dampf-Kreislaufes hinter dem Luftvorwärmer 12 auch eine neutrale Fahrweise oder neutrale Wasser-/Dampf-Konditionierung vorgesehen sein.

Mit der Erfindung wird erreicht, dass aufgrund der kombinierten oder neutralen Fahrweise im "zweiten" Teil des Wasser-Dampf-Kreislaufes vor dem Durchlaufdampferzeuger eine optimale Konditionierung des Wasser-/Dampf-/Kondensat-Mediums für die Verdampfung im Bereich des Durchlaufdampferhitzers und auf der anderen Seite ein optimaler Korrosionsschutz des Luftkondensators 12 durch die Ein- oder Zudosierung von zusätzlichem Alkalisierungsmittel oder alkalisch wirkendem Mittel im Bereich des Wasser-Dampf-Kreislaufes im Bereich hinter dem Durchlaufdampferzeuger und vor dem Luftkondensator 12 erreicht wird. Die exakte Trennung und damit eine sichere Fahrweise dieser Art der Konditionierung des Wasser-/Dampf-/Kondensat-Mediums wird Weiterhin dadurch erreicht, dass zwischen diesen Bereichen die Kondensatreinigungsanlage 13 und/oder - je nach verwendetem Alkalisierungsmittel - ein Aktivkohlefilter oder ein vorzugsweise Zeolithe aufweisendes Molekularsieb oder Ähnliches angeordnet ist, wodurch es möglich ist, dem im Wasser-Dampf-Kreislaufsystem strömenden Medium (Kondensat) überschüssiges Alkalisierungsmittel nach Durchströmen des Luftkondensators 12 zu entziehen.

Bei der im Ausführungsbeispiel nicht dargestellten Anordnung eines Filters, insbesondere Aktivkohlefilters oder Zeolithe aufweisenden Molekularsiebs, kommt im Bereich der Alkalisierungsmittel-Eindosierungseinrichtungen 14 insbesondere ein organisches Alkalisierungsmittel wie z. B. Cyclohexylamin, Morpholine, Diethylaminoethanol, Ethanolamin oder Ähnliches zum Einsatz, wobei ein solches Alkalisierungsmittel auch die Mischung eines oder mehrerer dieser Stoffe umfassen kann. Im Vergleich zu Ammoniak besitzen organische Alkalisierungsmittel einen geringeren Dampfdruck, was zur Folge hat, dass der Übergang von der Dampfphase in die wässrige Phase (Kondensat) des Wasser-/Dampf-/Kondensat-Mediums schneller und intensiver stattfindet. Auch wird hier zur Einstellung des gleichen pH-Wertes in diesem Medium (Kondensat) eine im Vergleich zum Ammoniak geringere Menge an organischem Alkalisierungsmittel benötigt. Um die Kondensatreinigungsanlage 13 im Falle der Verwendung von organischem Alkalisierungsmittel durch die, gegebenenfalls zusätzlich, zur Anwendung kommende Dosierung mit einem organischen Alkalisierungsmittel nicht zu belasten, ist in Kondensatströmungsrichtung vor der Kondensatreinigungsanlage die selektive Entfernung von organischem Alkalisierungsmittel mittels eines oder mehrerer Aktivkohlefilter oder eines oder mehrerer Zeolithe aufweisender Molekularsiebe möglich. Dies ermöglicht insbesondere auch die Nachrüstung bestehender Anlagen, da durch diese Maßnahme dann die. Dimensionierung: einer bestehenden, für die Entfernung von Ammoniak ausgelegten Kondensatreinigungsanlage nicht geändert zu werden braucht. Auch kann der Betrieb und die Fahrweise einer solchen Kondensatreinigungsanlage unverändert beibehalten :werden. Sollte allerdings eine größer dimensionierte oder ausreichend groß dimensionierte Kondensatreinigungsanlage zur verfügung stehen, dann kann als Alkalisierungsmittel in den Alkalisierungsmittel-Eindosierungseinrichtungen 14 weiterhin in vorteilhafter Weise Ammoniak ein- und zudosiert werden.

Auch wenn im Ausführungsbeispiel die zusätzliche Eindosierung von Alkalisierungsmittel mittels der Alkalisierungsmittel-Eindosierungseinrichtungen 14 in den Turbinenkondensataustrittsleitungen 3a angeordnet sind, so können diese prinzipiell in der gesamten Wasser-/Dampf-/Kondensat-Medium führenden Strecke hinter dem Durchlaufdampferzeuger angeordnet und ausgebildet sein, wobei aus praktischen Erwägungen im wesentlichen aber der Bereich vor und hinter der Niederdruckturbine 11 in Frage kommt. Wichtig ist hierbei lediglich, dass die Zudosierungs- oder Eindosierungsstell(en) für das Alkalisierungsmittel zur Einstellung der alkalischen Fahrweise in Dampf- oder Kondensatströmungsrichtung hinter den letzten Heizflächen des Durchlaufdampferzeugers angeordnet ist/sind.

In vorteilhafter Weise wird zur Einstellung der alkalischen Fahrweise in diesem Bereich das organische Alkalisierungsmittel oder ein organisches Alkalisierungsmittel verwendet, da dieses selektiv hinter dem Luftkondensator wieder entfernt werden kann, und somit keine Änderungen an einer eventuell bereits vorhandenen Kondensatreinigungsanlage 13 vorgenommen werden müssen, so dass keine mit erhöhten Betriebskosten und einem höheren Wasserverbrauch für die Regeneration von Ionentauschern verbundene größere Dimensionierung oder Auslegung der Kondensatreinigungsanlage erforderlich ist. Auch dürfte es bei der Verwendung von organischem Alkalisierungsmittel ausreichen, einen gegenüber der Ammoniak-Verwendung geringeren pH-Wert einzustellen, da aufgrund des geringeren Dampfdruckes das organische Alkalisierungsmittel bereits mit dem anfallenden Erstkondensat im Luftkondensator 12 kondensiert und dadurch ein geringerer pH-Wert zur Gewährleistung des Korrosionsschutzes, was gleich bleibend mit einer im Verhältnis zum Ammoniak geringeren Einsatzmenge an organischem Alkalisierungsmittel ist, ausreichend ist.

Die selektive Entfernung von organischem Alkalisierungsmittel, beispielsweise mit Hilfe eines Aktivkohlefilters oder eines Zeolithe aufweisenden Molekularsiebes, hat darüber hinaus den Vorteil, dass diese Filter für einen erneuten Einsatz ohne Chemikalien unter der Verwendung von Dampf regeneriert oder aufbereitet werden können. Hierbei bedeutet die vorstehend erläuterte selektive Abtrennung der organischen Alkalisierungsmittel durch Aktivkohle und/oder Zeolithe, dass entweder bestimmten organische Alkalisierungsmittel untereinander und/oder aber insbesondere organisches Alkalisierungsmittel selektiv vom Ammoniak als Alkalisierungsmittel getrennt dem Wasser-/Dampf-/Kondensat-Medium entzogen werden kann. D. h., es wird organisches Alkalisierungsmittel dem Kondensat entzogen, wohingegen Ammoniak nicht abgetrennt wird. Das verbleibende ammoniakhaltige Kondensat kann dann wie üblich in der Kondensatreinigungsanlage 13, insbesondere dann schon mit dem für die Einstellung des pH-Wertes in der kombinierten Fahrweise notwendigen Mengen- oder Konzentrationsgehalt, soweit gewünscht, aufbereitet werden.

## Patentansprüche

1. Verfahren zur chemischen Wasser-/Dampf-Konditionierung eines im Wasser-Dampf-Kreislauf eines, insbesondere fossilbefeuerten, Durchlaufdampferzeugers (1) einer Kraftwerksanlage im Kreislauf geführten Wasser-/Dampf-/Kondensat-Mediums, welches stromabwärts einer Turbinenanlage (8) einem im Wasser-Dampf-Kreislauf angeordneten Luftkondensator (12) zugeführt wird, wobei die chemische Wasser-/Dampf-Konditionierung die Zudosierung eines alkalisch wirkenden Mittels in das Wasser-/Dampf-/Kondensat-Medium umfasst,
**dadurch gekennzeichnet,**
**dass** dem Wasser-/Dampf-/Kondensat-Medium stromabwärts des Durchlaufdampferzeugers (1) im Bereich mindestens einer Niederdruckturbine (11) und/oder stromabwärts einer Niederdruckturbine (11) und vor Eintritt in den Luftkondensator (12), insbesondere zusätzlich, das alkalisch wirkende Mittel zudosiert und eine alkalische Fahrweise (AVT) der Wasser-/Dampf-Konditionierung eingestellt und durchgeführt wird, wobei mittels der Zudosierung des alkalisch wirkenden Mittels in dem Wasser-/Dampf-/Kondensat-Medium des Wasser-Dampf-Kreislaufes vor Eintritt in den Luftkondensator (12) ein pH-Wert zwischen 9,6 und 9,9 eingestellt wird.

2. Verfahren nach Anspruch 1, **dadurch gekennzeichnet, dass** als alkalisch wirkendes Mittel ein organisches Alkalisierungsmittel und/oder Ammoniak zudosiert wird.

3. Verfahren nach einem der vorhergehenden Ansprüche, **dadurch gekennzeichnet, dass** aus dem Wasser-/Dampf-/Kondensat-Medium stromabwärts des Luftkondensators (12) vor Eintritt in eine Kondensatreinigungsanlage (13) organisches Alkalisierungsmittel zumindest teilweise selektiv, insbesondere mittels Aktivkohlefilter oder Zeolithe aufweisender Filter, abgetrennt wird.

4. Verfahren nach einem der vorhergehenden Ansprüche, **dadurch gekennzeichnet, dass** stromabwärts des Luftkondensators (12) in dem Wasser-Dampf-Kreislauf stromabwärts einer Kondensatreinigungsanlage (13) und/oder stromabwärts eines Speisewassertanks (2) eine kombinierte Fahrweise (OT) der Wasser-/Dampf-Konditionierung mit einer einen pH-Wert von 8,5 bis 9,0 im Wasser-/Dampf-/Kondensat-Medium des Wasser-Dampf-Kreislaufes einstellenden Dosierung eines alkalisch wirkenden Mittels und einer Sauerstoff-Dosierung von 30 - 250 µg/l, vorzugsweise 30 - 150 µg/l, durchgeführt und einstellt wird.

5. Kraftwerksanlage mit einem, insbesondere fossilbefeuerten Durchlauf-Dampferzeuger (1) mit mindestens einer angeschlossenen Turbine (7, 10, 11) und mindestens einem der mindestens einen Turbine (7, 10, 11) nachgeordneten Luftkondensator (12) sowie mit einen umlaufenden Wasser-Dampf-Kreislauf ausbildenden und Einrichtungen (14, 15, 16, 17) zur Durchführung einer chemischen Wasser-/Dampf-Konditionierung mittels eines alkalisch wirkenden Mittels aufweisenden Rohrleitungen (3, 3a), die in den Luftkondensator (12) einmündenden Turbinenkondensataustrittsleitungen (3a) umfassen,
**dadurch gekennzeichnet,**
**dass** alle in den mindestens einen Luftkondensator (12) einmündende Turbinenkondensataustrittsleitungen (3a) und/oder den Turbinenkondensataustrittsleitungen (3a) aus dem Bereich stromabwärts des Durchlaufdampferzeugers (1), vorzugsweise von der Niederdruckturbine (11), das Wasser-/Dampf-/Kondensat-Medium zuführende Rohrleitungen (3) mindestens eine stromaufwärts des Luftkondensators (12) angeordnete Alkalisierungsmittel-Eindosierungseinrichtung (14) aufweisen.

6. Kraftwerksanlage nach Anspruch 5, **dadurch gekennzeichnet, dass** die Alkalisierungsmittel-Eindosierungseinrichtung (14) Vorrichtungen zur Einstellung und Kontrolle der Durchführung einer alkalischen Fahrweise (AVT) der Wasser-/Dampf-Konditionierung umfasst.

7. Kraftwerksanlage nach Anspruch 5 oder 6, **dadurch gekennzeichnet, dass** stromabwärts des Luftkondensators (12) und stromaufwärts eines Speisewassertanks (2) eine Kondensatreinigungsanlage (13) angeordnet ist.

8. Kraftwerksanlage nach einem der Ansprüche 5 bis 7, **dadurch gekennzeichnet, dass** in Kondensatströmungsrichtung zwischen dem Luftkondensator (12) und dem Speisewassertank (2), vorzugsweise vor einer/der Kondensatreinigungsanlage (13), ein Aktivkohlefilter oder Molekularsieb von dem Wasser-/Dampf-/Kondensat-Medium zumindest teilweise durchströmbar angeordnet ist.

9. Kraftwerksanlage nach einem der Ansprüche 5 bis 8, **dadurch gekennzeichnet, dass** der Wasser-Dampf-Kreislauf dem Luftkondensator (12) nachgeschaltet und dem Durchlaufdampferzeuger (1) vorgeschaltet eine zweite und/oder dritte Alkalisierungsmittel-Eindosierungseinrichtung (15, 16) mit zugeordneter Sauerstoffdosierungseinrichtung sowie eine kombinierte Fahrweise (OT) der Wasser-/Dampf-Konditionierung einstellende und durchführenden Steuerungsmittel aufweist.

## Claims

1. A method for chemical water-steam conditioning of a water/steam/condensate medium conducted in the water-steam cycle of a continuous steam generator (1), in particular of a fossil fuel-operated continuous steam generator, of a power plant which is fed to an air condenser (12) arranged downstream of a turbine system (8) in the water-steam cycle, with the chemical water-steam conditioning process encompassing the metered addition of an alkalizing agent to the water/steam/condensate medium, **characterized in that** the alkalizing agent is added, in particular in addition, to the water/steam/condensate medium downstream of the continuous steam generator (1) in the zone of at least one low-pressure turbine (11) and/or downstream of a low-pressure turbine (11) and before the medium penetrates into the air condenser (12), and that an all-volatile treatment (AVT) of the water/steam conditioning process is adjusted and carried out, with the addition of the alkalizing agent adjusting a pH value ranging between 9.6 and 9.9 in the water/steam/condensate medium before the medium penetrates into the air condenser (12).

2. The method according to claim 1, **characterized in that** an organic alkalizing agent and/or ammonia is added to act as an alkalizer.

3. The method according to one of the preceding claims, **characterized in that** the said organic alkalizing agent is separated at least partially selectively, in particular by means of an active carbon filter or zeolite filter, from the water/steam/condensate medium downstream of the air condenser (12) before the medium penetrates into a condensate polishing system (13).

4. The method according to one of the preceding claims, **characterized in that** a combined cycle (Oxygenated Treatment (OT)) of the water-steam conditioning process with the addition of an alkalizing agent adjusting a pH value ranging between 8.5 and 9.0 in the water/steam/condensate medium and a oxygen supply of 30 - 250 µg/l, preferably 30 - 150 µg/l, is adjusted downstream of the air condenser (12) in the water-steam cycle downstream of a condensate polishing system (13) and/or downstream of a feed water tank (2).

5. A power plant with a continuous steam generator, in particular with a fossil fuel-operated continuous steam generator (1), having at least one connected turbine (7, 10, 11) and at least one air condenser (12) arranged downstream of one of the at least one turbine (7, 10, 11) as well as pipelines (3, 3a) forming a water-steam cycle and including devices (14, 15, 16, 17) for performing a chemical water-steam conditioning process by means of an alkalizing agent, with the said pipelines comprising turbine condensate discharge pipes (3a) leading into the air condenser (12), **characterized in that** all turbine condensate discharge pipes (3a) leading into the at least one air condenser (12) and/or all pipelines feeding the water/steam/condensate medium from the zone downstream of the continuous steam generator (1), preferably from the low-pressure turbine (11) into the turbine condensate discharge pipes (3a) include at least one alkalizing agent feeding device (14) arranged upstream of the air condenser (12).

6. The power plant according to claim 5, **characterized in that** the alkalizing agent feeding device (14) comprises devices for adjusting and monitoring an all-volatile treatment (AVT) of the water/steam conditioning process.

7. The power plant according to claim 5 or 6, **characterized in that** a condensate polishing system (13) is arranged downstream of the air condenser (12) and upstream of a feed water tank (2).

8. The power plant according to one of the claims 5 to 7, **characterized in that** an active carbon filter or molecular sieve is arranged in the direction of the condensate flow between the air condenser (12) and the feed water tank (2), preferably before a/the condensate polishing system (13), in a way that allows the water/steam/condensate medium to at least partially flow through the said filter or sieve.

9. The power plant according to one of the claims 5 to 8, **characterized in that** the water-steam cycle includes a second and/or third alkalizing agent feeding device (15, 16) with a dedicated oxygen supplying device arranged downstream of the air condenser (12) and upstream of the continuous steam generator (1) as well as controlling devices adjusting and performing a combined cycle (Oxygenated Treatment (OT)) of the water-steam conditioning process.

## Revendications

1. Procédé pour le conditionnement chimique eau/vapeur d'un milieu eau/vapeur/condensat recyclé dans le circuit eau/vapeur d'un générateur de vapeur à flux continu (1), en particulier à combustible fossile, d'une centrale électrique, lequel milieu est délivré, en aval d'une installation de turbines (8), à un condenseur à air (12) aménagé dans le circuit eau/vapeur, dans lequel le conditionnement chimique eau/vapeur comprend l'addition dosée d'un agent à effet alcalin dans le milieu eau/vapeur/condensat,
**caractérisé en ce que**,
l'agent à effet alcalin est ajouté de manière dosée au milieu eau/vapeur/condensat en aval du générateur de vapeur à flux continu (1) dans la zone d'au moins une turbine basse pression (11) et/ou en aval d'une turbine basse pression (11) et avant l'entrée dans le condenseur à air (12), en particulier en complément, et une procédure alcaline (AVT) du conditionnement eau/vapeur est réglée et mis en oeuvre, dans lequel au moyen de l'addition dosée de l'agent à effet alcalin, une valeur de pH comprise entre 9,6 et 9,9 est réglée dans le milieu eau/vapeur/condensat du circuit eau-vapeur avant l'entrée dans le condenseur à air (12).

2. Procédé selon la revendication 1, **caractérisé en ce que** l'on ajoute de manière dosée un agent d'alcalinisation organique et/ou de l'ammoniac comme agent à effet alcalin.

3. Procédé selon l'une quelconque des revendications précédentes, **caractérisé en ce que** l'on détache du milieu eau/vapeur/condensat en aval du condenseur à air (12) avant l'entrée dans une installation d'épuration du condensat (13), un agent d'alcalinisation organique, au moins en partie de manière sélective, en particulier en utilisant un filtre à charbon actif ou un filtre à base de zéolites.

4. Procédé selon l'une quelconque des revendications précédentes, **caractérisé en ce que**, en aval du condenseur à air (12) dans le circuit eau-vapeur en aval d'une installation d'épuration du condensat (13) et/ou en aval d'un réservoir d'alimentation en eau (2), une procédure combinée (OT) du conditionnement eau/vapeur est mise en oeuvre et réglée avec une addition dosée d'un agent à effet alcalin réglant une valeur de pH entre 8,5 et 9,0 dans le milieu eau/vapeur/condensat du circuit eau-vapeur et avec une addition dosée d'oxygène de 30 à 250 µg/l, de préférence de 30 à 150 µg/l.

5. Centrale électrique comportant un générateur de vapeur à flux continu (1), en particulier à combustible fossile, ayant au moins une turbine raccordée (7, 10, 11) et au moins un condenseur à air (12) aménagé derrière la au moins une turbine (7, 10, 11), ainsi que des canalisations (3, 3a) formant un circuit eau-vapeur périphérique et présentant des dispositifs (14, 15, 16, 17) pour assurer un conditionnement chimique eau/vapeur au moyen d'un agent à effet alcalin, lesquelles canalisations comprennent des conduites de sortie de condensat de turbine (3 a) débouchant dans le condenseur à air (12),
**caractérisée en ce que**,
toutes les canalisations (3) délivrant le milieu eau/vapeur/condensat dans les conduites de sortie de condensat de turbine (3a) débouchant dans le au moins un condenseur à air (12) et/ou dans les conduites de sortie de condensat de turbine (3 a) issues de la zone en aval du générateur de vapeur à flux continu (1), de préférence de la turbine basse pression (11), présentent au moins un dispositif d'addition dosée d'agent d'alcalinisation (14) agencé en amont du condenseur à air (12).

6. Centrale électrique selon la revendication 5, **caractérisée en ce que** le dispositif d'addition dosée de l'agent d'alcalinisation (14) comprend des dispositions pour le réglage et la commande de la mise en oeuvre d'une procédure alcaline (AVT) du conditionnement eau/vapeur.

7. Centrale électrique selon la revendication 5 ou 6, **caractérisée en ce qu'**une installation d'épuration du condensat (13) se trouve agencée en aval du condenseur à air (12) et en amont d'un réservoir d'alimentation en eau (2).

8. Centrale électrique selon l'une quelconque des revendications 5 à 7, **caractérisée en ce que**, dans le sens d'écoulement du condensat entre le condenseur à air (12) et le réservoir d'alimentation en eau (2), de préférence avant la ou une installation d'épuration du condensat (13), on a aménagé un filtre à charbon actif ou un tamis moléculaire qui peut être traversé, au moins en partie, par le milieu eau/vapeur/condensat.

9. Centrale électrique selon l'une quelconque des revendications 5 à 8, **caractérisée en ce que** le circuit eau-vapeur en aval du condenseur à air (12) et en amont du générateur de vapeur à flux continu (1) présente un deuxième et/ou un troisième dispositif d'addition dosée (15, 16) d'agent d'alcalinisation avec un dispositif d'addition dosée d'oxygène affecté, ainsi qu'un moyen de commande réglant et mettant en oeuvre une procédure combinée (OT) du conditionnement eau/vapeur.
